(19)

Europäisches
Patentamt
European
Patent Office
Office européen
des brevets

(11) **EP 0 989 401 B1**

(12) **EUROPEAN PATENT SPECIFICATION**

(45) Date of publication and mention
of the grant of the patent:
**08.06.2011 Bulletin 2011/23**

(51) Int Cl.:
*G01N 30/12* *(2006.01)* *G01N 31/12* *(2006.01)*

(21) Application number: **99830552.8**

(22) Date of filing: **06.09.1999**

(54) **Method and devices for improving the flash dynamic combustion reaction for the elemental analysis of C H N S O**

Verfahren und Vorrichtungen zur Verbesserung der Flash-dynamischen Verbrennungsreaktion für die Elementaranalyse von C H N S O

Procédé et dispositifs pour l'amélioration de la réaction de combustion ultradynamique pour l'analyse élémentaire de C H N S O

(84) Designated Contracting States:
**AT BE CH CY DE DK ES FI FR GB GR IE IT LI LU MC NL PT SE**

(30) Priority: **23.09.1998 IT BS980068**

(43) Date of publication of application:
**29.03.2000 Bulletin 2000/13**

(73) Proprietor: **Eurovector S.p.A.**
**20144 Milano (IT)**

(72) Inventors:
• **Boursier Niutta, Stefano**
**80121 Napoli (IT)**
• **Sisti, Leonardo**
**27050 Redavalle (Pavia) (IT)**

(74) Representative: **Crippa, Paolo Ernesto**
**Jacobacci & Partners S.p.A.**
**Piazza della Vittoria 11**
**25122 Brescia (IT)**

(56) References cited:
EP-A- 0 544 142    EP-A- 0 586 969
DE-A- 19 622 517    FR-A- 2 625 819
US-A- 4 293 308    US-A- 4 525 328

• KIRSTEN W J ET AL: "RAPID AND AUTOMATIC DETERMINATION OF NITROGEN USING FLASH COMBUSTION OF LARGE SAMPLES" ANALYTICAL CHEMISTRY, AMERICAN CHEMICAL SOCIETY. COLUMBUS, US, vol. 58, no. 9, 1 August 1986 (1986-08-01), pages 2109-2112, XP002073731 ISSN: 0003-2700
• COLOMBO B ET AL: "TOTAL AUTOMATIC NITROGEN DETERMINATION" INTERNATIONAL LABORATORY, INT. SCIENTIFIC COMMUNICATIONS INC. FAIRFIELD CT, US, vol. 12, no. 7, 1 September 1982 (1982-09-01), page 76,78,80,82, XP002073732 ISSN: 0010-2164

**Description**

The present invention pertains to the improvement of the flash dynamic combustion reaction connected with gas chromatography for carrying out the elementary analysis of C H N S O (carbon, hydrogen, nitrogen, sulfur and oxygen) in automatic elemental analyzers.

Specifically, the present invention pertains to a method, to devices, and to an arrangement of the devices in a pneumatic circuit under electronic control for improving the dynamic combustion reaction of a sample of material with the calculation of the optimal oxygen, as well as to the use of a novel system for metering the oxygen and to the ways of injecting the oxygen into a quartz, metal or ceramic reactor, which constitutes the initial phase of the process of analysis of C H N S O in solid and liquid samples of a wide variety of matrices.

Automatic elemental analyzers are based on the principle of flash dynamic combustion of a sample with elimination of the excess oxygen, separation of the gases produced by the combustion, followed by their passage through a packed gas chromatography column and subsequent quantitative determination with heat-conductivity sensors.

From the calculation performed by a computer to determine the amount of oxygen needed for the combustion in relation to the matrix of the sample, to its weight and to the adjuvant of the combustion itself, the present invention makes it possible to inject the desired amount of oxygen at the most appropriate times in order to obtain the most efficient combustion in the reactor without an interruption in the flow of a carrier gas used in the nonoxidation phase or oxidation phase in the absence of oxygen.

The results obtained on prior-art standards of the combustion ratios of C H N S O make it possible to assess the efficiency of the combustion and to reduce, automatically as well, the excess oxygen to optimal values with the use of the most appropriate times to meet the best conditions of combustion and of life of the catalysts for reducing the oxygen.

The devices used up to now are based on the admission into the combustion reactor of fixed amounts of oxygen picked up from a reservoir of a defined volume by means of the carrier gas. The volumes can only be changed by manual interventions of replacing the reservoirs proper.

A recent patent application of the same applicant n. B51997A 000033, which is still secret, describes the admission of varying masses of oxygen under mass flow control by varying the admission time of the constant oxygen mass flow and by interrupting the mass flow of the carrier gas for the corresponding time.

US-4293308 discloses an analysis arrangement comprising an oxygen feed line which converges into a carrier gas feed line at a junction upstream of a combustion reactor, wherein the percentage of oxygen is controlled.

The present invention, as defined in the claims, makes possible the independent and automatic selection both of the optimal amount of oxygen to be injected and of the time during which this amount of oxygen can be injected and the ways proper of the injection in the presence of a carrier gas flow in order to obtain improved combustions in relation to different matrices of the sample, reducing the excess oxygen to a minimum and increasing the analytical precision and the life of the catalysts.

The present invention pertains to both the analytical methods that use two separate reactors for the oxidation and reduction phase and those that perform the oxidation and the reduction in the same reactor with suitable temperature profiles, and it pertains to the use of quartz, metal or ceramic reactors which are heated in a suitable furnace or in furnaces at the usual temperatures ranging from 950°C to 1,400°C or at about 650-750°C for the reduction.

The various features of novelty which characterize the invention are pointed out with particularity in the claims annexed to and forming a part of this disclosure. For a better understanding of the invention, its operating advantages and specific objects attained by its uses, reference is made to the accompanying drawings and descriptive matter in which a preferred embodiment of the invention is illustrated.

In the drawings:

Figure 1 is a schematic view of the components of a current elemental analyzer of the type indicated above;
Figure 2 is a schematic view of the system for metering the oxygen in the current analyzers of the type in Figure 1;
Figure 3 is a schematic view of a system for metering the oxygen as described in the above-mentioned previous patent; and
Figure 4 is a schematic view of the system for metering the oxygen according to the present invention.

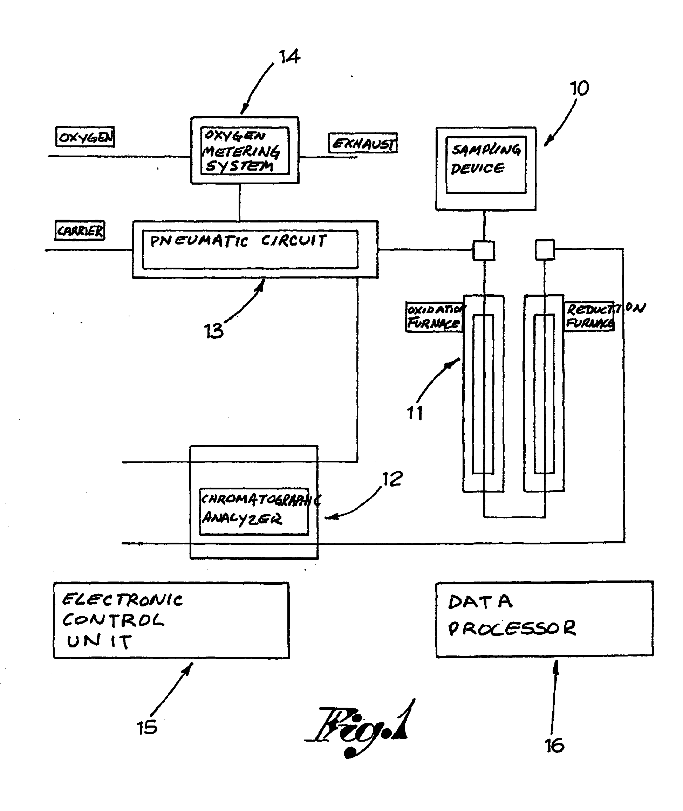

Referring to the drawings in particular, an elemental analyzer is an instrument intended for analyzing the elemental composition C H N S O in samples of solid or liquid materials. It comprises the following functional units (Figure 1).

- A sampling device 10 whose task is to introduce the sample into the combustion reactor.
- A system 11 which consists of a furnace in which is accommodated a reaction tube usually made of quartz, metal, aluminum or another material and brought to a temperature of about 950°C to 1,400°C for the combustion of the sample, which is thus converted into a gas mixture of the type of $N_2$, $CO_2$, $H_2O$, $SO_2$. A first reactor is provided with a catalytic bed which is able to facilitate and quantitatively complete the combustion reaction. The excess oxygen is eliminated by reduction by passage through a second copper-based catalytic bed accommodated in the bottom part of the first reactor or in a second reactor.

- A gas chromatographic analyzer 12 for the separation of the gases which are obtained from the combustion, based on the different retention times that the various gases spend on the column.

- A pneumatic circuit 13 capable of creating a continuous flow of carrier gas, nearly always Helium or Argon, which carries the gases of the initial combustion through the combustion reactor and then through possible traps, and with the chromatographic column making them flow, once they have been separated, into the measuring cell of the heat-conductivity sensor, which is balanced by the carrier gas proper in the reference cell.
- A metering system 14 for the controlled admission of a preset amount of oxygen into the combustion system.
- An electronic system 15 with a data processor capable of controlling the functioning of the various subsystems.

In particular, the oxygen metering system 14 is a mechanism capable of providing known and preset amounts of oxygen in the combustion phase of the sample in relation to the following criteria:

- The oxygen must be introduced in a sufficient amount to obtain a complete quantitative combustion at the combustion temperatures of the reactor without which the analysis would prove to be distorted in the absolute values and in the relative values, yielding incorrect indications of the absolute values and of the relative elemental composition.
- The oxygen must not be introduced too much in excess; the excess oxygen is eliminated by the use of expensive catalysts, which require, among other things, too frequent manual interventions with problems in the recalibration of the operating conditions.

The metering system 14, which is connected to the remaining pneumatic circuit 13, usually comprises: a tared-volume reservoir; a solenoid valve unit; two pressure and mass flow regulators; an electronic control unit.
The system operates in two phases. The first one is that of filling the reservoir with oxygen, and the second one is that of emptying same reservoir with admission of the oxygen into the oxygen use circuit. The phases are managed by the electronic control unit.

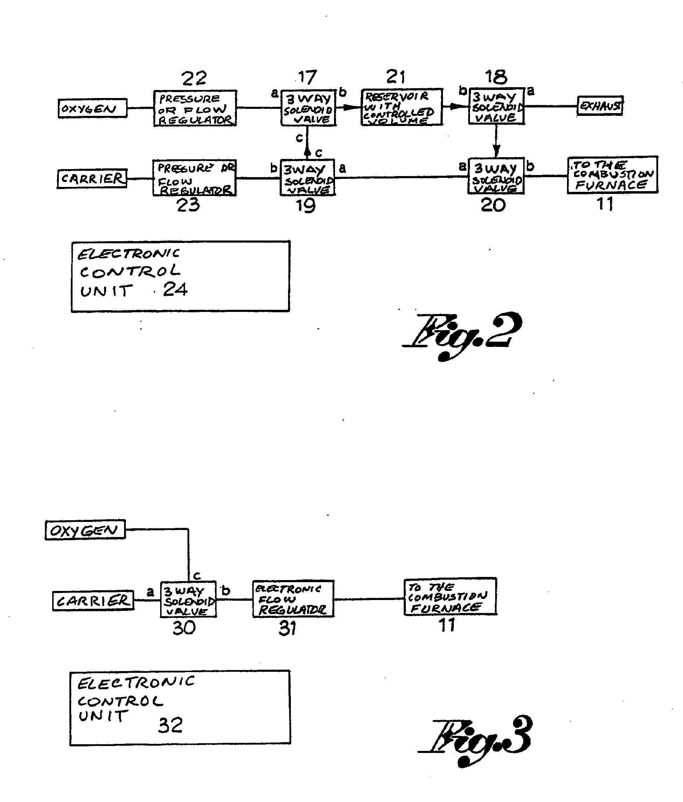

Figure 2 shows one of the possible embodiments of such a system, consisting of four three-way solenoid valves 17-20, a reservoir having a preset volume 21, two pressure or flow regulators 22, 23, and an electronic control unit 24.
The carrier gas and the oxygen are controlled under pressure or under flow by appropriate regulators 22, 23, which may be either mechanical or electronic, thus either with standard presetting or electronically.
In the first phase, all of the solenoid valves 17-20 are positioned in such a way that the gases can flow along the path a-b, while the passage c remains excluded. In this way, it is achieved that:

- The oxygen flows, by means of the solenoid valve 17, into the reservoir 21, which is filled completely thanks to the exhaust through the solenoid valve 18, which makes it possible for the gas previously contained therein to flow out.
- On the other hand, the carrier gas proceeds by means of the solenoid valves 19 and 20 to the combustion furnace with a flow controlled by the appropriate regulator 23.
- In the second phase, all of the solenoid valves are changed in such a way that the gases are able to flow along the path b-c, while the passage "a" remains excluded. In this way, it is achieved that: The oxygen stops flowing, and the carrier gas enters, by means of the solenoid valves 19 and 17, into the reservoir 21, which expels the oxygen previously accumulated therein and sends it, by means of the solenoid valves 18 and 20, into the combustion furnace at the flow rate of the carrier gas proper.

It should be noted that the capacity of the oxygen accumulation reservoir must be changed in order to regulate the amount of oxygen.
For the analysis, the sample is weighed (from a few mg to a few hundred mg), then placed in closed, watertight capsules and then deposited in the sampling device. The value of the weighing is sent to the external processor.
The oxygen from the downstream cylinder of a regulating manometer is introduced into the accumulation metering system 14 described above and then proceeds to the exhaust.
Meanwhile, the carrier gas, suitably controlled by the pressure or flow regulator, flows into the instrument, entering the combustion furnace and then into the reduction furnace and finally into the chromatographic analyzer. The carrier gas also flows into the reference cell of the sensor of the chromatographic system as necessary for the initial calibration balancing of the analysis.
Once the oxygen accumulation reservoir is loaded and the other conditions are met, the cycle of analysis may start.
The solenoid valves of the metering system are changed such that the carrier gas enters the reservoir, transporting the oxygen contained therein outwards in order to send it into the combustion furnace at the rate of the carrier gas proper.
After a programmed time, depending on the volume and flow of the carrier gas, the solenoid valves are returned to their original position for reloading the reservoir and a subsequent analysis.

The operation of the sampling device lies in letting the prepared sample fall, by gravity, into the oxidation furnace at a certain moment in time. This sample is quantitatively oxidized thanks as well to the exothermal reaction of the watertight capsule that is used as a container, as well as to the presence of appropriate catalysts.

The gases produced by the combustion subsequently pass into the reducing catalytic bed, in which the excess oxygen is eliminated, and then they flow to the gas chromatographic analyzer, in which the separation of $N_2$, $CO_2$, $H_2O$, $SO_2$ and subsequent detection by the heat-conductivity sensor take place.

The signal coming from the sensor is sent to a PC, which takes steps to associate the weight values of the sample with the results of the chromatogram in order to provide the percentages and the amounts of the elemental components.

The current system has the following limitations.

* Impossibility of optimal metering of the oxygen if not through different weights that take the different matrices into account.
* Consequent use of an excess of oxygen with a degree of purity of 99.995%.
* The system of filling to a predefined volume does not take into account the nature of the sample and of the matrix, but, with the exception of the emptying period, the oxygen admitted in it continues to flow to the exhaust for the entire analysis time even after filling the reservoir.
* It is not possible to associate an appropriate dose of oxygen with each sample, and the replacement of the reservoir does not represent a possible solution in the presence of samples with different concentrations or matrices.
* The ways of admitting the oxygen take place at the fixed rate of the carrier gas and mixing is achieved in the reservoir because of the counterdiffusion ofthe oxygen into helium and of helium into oxygen with the effect of diffusion of the oxygen front and reduction in the concentration of the oxygen in situ at the time of the flash.
* The result is that, in order to prevent errors due to incomplete combustions, it is necessary to inject doses of oxygen in excess and sometimes in high excess with drawbacks in terms of costs and in terms of the duration of the reducing catalytic beds.
* The system presents complete rigidity in terms of the volumes and the rate of admission of the oxygen into the combustion reactor.
* The replacement of the reservoirs does not prove to be a simple operation, particularly due to the need to maintain the carrier gas seal.

In a simplified system as shown in Figure 3, and corresponding to the innovative part that is described in the above-mentioned previous patent of the same applicant, it is possible to admit the carrier gas into the combustion furnace or, as an alternative, the oxygen by means of changing a 3-way solenoid valve, regulating the oxygen mass flow and the carrier gas by means of an electronic mass flow regulator.

Although this novel method and the related device simplify the operations, preventing the unnecessary wasting of oxygen, obtaining a possible regulation of the oxygen mass admitted into the reactor by means of regulating the opening time of the three-way solenoid valve on the c-b side, it is not possible to prevent any other insurmountable limitations resulting from:

- the impossibility of regulating, besides the volumes admitted, the admission times of these volumes as well;
- a significant drawback derives from the fact that, because of elemental analyzers which are based on the principles stated, although the electronic flow regulators are capable of performing an instantaneous regulation of the flow of carrier gas and of oxygen immediately downstream of the regulator proper, the regulator is not able to restore a flow constancy in the entire analytical circuit in the times that are necessary; this leads to compromises of the analytical accuracy for N, C as the chromatographic peaks appear when the baseline has still not returned to the value set at the time of the sampling;
- for the same reason indicated for the possibility of regulating the flow at points away from the flow regulator, as well as due to the presence of significant variations in the sections and in the temperatures of the circuit, the oxygen flow that reaches the reactor shows a dilution of the oxygen proper because of the counterdiffusion of very different gases ($O_2$ and He), reaching useful oxygen concentrations in situ with times that are longer and less efficient than those observed before.

Starting from the above, the present invention provides a novel method of arranging the valves, the electronic pressure regulators and the electronic measurer ofthe mass flow, as well as the paths ofthe oxygen gas through a restricting means, both being integral parts ofthe present invention, in order to perform the metering of the oxygen volume and the selection of the injection time independently, carrying the gas proper up to the reactor to the site of the combustion in a highly efficient manner, in such a way as to obtain an optimization of the use of the oxygen and of its efficiency even with the use of reactors made of different materials and with a different temperature profile with the aid of the linear indications coming from the computer on the theoretical calculation of the oxygen needed.

The result is obtained by means of an appropriate arrangement, which, by means of simple electrical commands made automatically, make possible the introduction of the purest oxygen in the amounts, in the times and using the most effective means in an optimal or optimizable manner with full flexibility and with means which make possible the highest efficiency in situ for containing the phenomena of retrodiffusion of oxygen into helium

The system operates by regulating the flow of oxygen $O_2$ by means of the measurement of the difference in pressure $\Delta P$ upstream and downstream of a calibrated restriction R1, with the use of Poiseuille's equation:

$$F = \frac{\pi D^4}{256\, \eta L}$$

in which, since D (diameter) and L (length) are constant and at constant temperature, $\eta$ is constant; therefore, the flow of oxygen may be obtained by Poiseuille's equation, which is simply expressed as

$$F = K\, \frac{P1^2 - P0^2}{P0}$$

in which P0 and P1 are the pressures upstream and downstream of the restriction.

The flow measurer FM arranged in the circuit on the branch of the carrier [gas] as indicated in the figure provides the real mass flow.

It is possible to achieve that the injection time of the volume proper into the reactor can be associated with each value of oxygen volume, and in this case, injections will take place at different differences in pressure ($\Delta P^2$).

The means with which the oxygen flows into the system through the restriction R1 and the optimum distance $\underline{d}$ from the head of the reactor make it possible to obtain the best conditions for minimizing the counterdiffusion with flashes that are much brighter and are obtained in the times expected in relation to the composition of the samples with consequent minimization of the oxygen excesses.

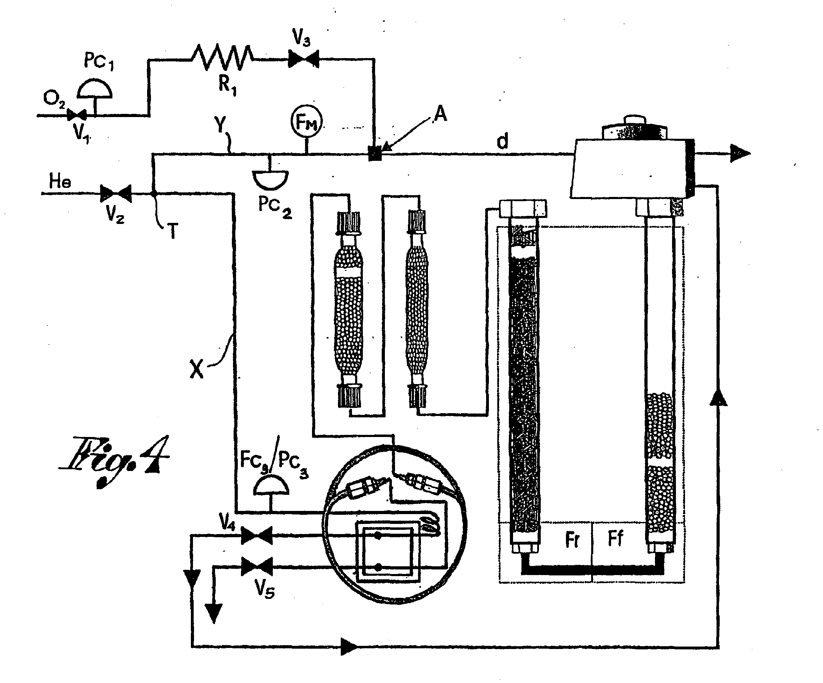

Figure 4 shows an exemplary embodiment, in which:

V1 = Valve for admitting the $O_2$;
V2 = Valve for admitting the carrier gas, helium;
PC 1= Electronic oxygen pressure regulator;
R1 = Calibrated restriction;
V3 = Valve for injecting the oxygen into the reactor;

T = T junction for the division of the helium into reference $\underline{X}$ and measured Y carrier gas;
PC2 = Electronic pressure regulator for the carrier [gas];
FM = Electronic measurer of the flow of the carrier [gas];
A = T junction between the oxygen line and the carrier [gas] measurement line;
PIFC3 = Electronic regulator of the pressure or flow on the reference carrier gas line;
V4 = Valve for reference He outlet used as washing as well;
V5 = Valve for outlet of the carrier gas and of the separated gases;
FF = Front reactor;
FR = Rear reactor;
d = Distance covered by the oxygen from the junction A to the injection point.

On the helium (He) side, the flow of the carrier gas is guaranteed by the opening of the valve V1.

The helium is divided into two flows, a reference flow X and a measuring flow Y by means of a $\underline{T}$ junction.

On the reference X side, the helium flows through an electronic mass flow regulator FC3 or pressure regulator PC3 with a flow that is constant and suitable for obtaining the purging of air from the sampling device.

On the measurement Y side, the helium flows through a pressure regulator PC2 with a flow that is constant and is electronically measured by a digital mass flow measurer FM and, after having passed through the entire analytical circuit, is sent to the exhaust by means of the valve V5.

Upon the demand for oxygen for the combustion, the valves V2 and V3 make it possible for the oxygen itself to pass because of the difference in pressure maintained by the electronic pressure regulator PC1 with a flow that is determined by the restriction "R1" and automatically calculated by Poiseuille's equation.

The volume and the injection time of the oxygen can be set independently by electronically regulating the pressure and the amount of the oxygen.

Starting from the matrix of the sample, from the combustion adjuvant and from the weight of the sample, it is possible to determine the theoretical amount of oxygen and to proceed, by means of automatic routines, with the optimal determination of the amounts and times in relation to the convergence of the analytical results obtained.

The regulation of the distance d from the point of flowing together A of the carrier gas flow and of the oxygen flow makes possible means of injection the oxygen flow that are optimal for the front of the gas flow into the reactor and for the concentration in situ.

The proposed method is the result of the devices used, their reciprocal arrangement and the composition of the pneumatic circuit.

The efficiency of this method is also innovative compared with the previous means shown in Figure 2 and in Figure 3 in which the mass flow regulator is incapable of maintaining an appropriate oxygen flow front if the front is required at a site away from the flow regulator with diameters of the tubes forming the pneumatic circuit and temperatures of same so variable as to give rise to truly considerable variations in the viscosity of the gases and such that the constancy of the flow can only be restored in times that are much longer than those that are useful for the analytical determinations.

The closing of the valve V3 interrupts the distribution of the oxygen flow when the desired oxygen volume is admitted.

The real gas mass flow measurer FM measures the mass flow ofthe carrier gas before, during and after the injection of oxygen and demonstrates the disturbance ofthe system during the admission of oxygen, its duration and the restoration of the flow stability conditions in times useful for the complete performance of the analytical cycle.

The stabilization of the mass flow in the analytical circuit is rapid, and the return to the base line is guaranteed somewhat before the flowing out of the peaks starts from the chromatographic column and the related metering of the nitrogen and carbon contents with improved reproducibility and accuracy.

While a specific embodiment of the invention has been shown and described in detail to illustrate the application of the principles of the invention, it will be understood that the invention may be embodied otherwise without departing from such principles, as defined in the claims.

**Claims**

1. A method for improving the flash dynamic combustion reaction connected with gas chromatography for the elemental analysis of C H N S O in an automatic elemental analyzer, the method comprising:

   - providing at least one combustion reactor;
   - providing a sampling device;
   - introducing a sample of material into the combustion reactor with the sampling device;
   - providing an oxygen feed line;
   - admitting controlled volumes of oxygen with the oxygen feed line into the combustion reactor depending on the sample for the complete combustion thereof;
   - providing a pneumatic circuit, comprising a reference side (X) and a measurement side (Y) for creating a continuous flow of a carrier gas that is able to carry the oxygen to the reactor and the gases of the combustion through the reactor, then through a gas chromatographic analyzer and, after their separation, into a thermal conductivity detector,
   said oxygen feed line converging into said measurement side (Y) at a junction (A) upstream and at a given distance (d) of said combustion reactor;
   - providing an electronic apparatus with a data processor for controlling the functioning of the elemental analyzer;
   - providing an electronic pressure regulator (PC1) associated to said oxygen feed line, upstream of a calibrated restriction (R1) an electronic carrier gas pressure regulator (C2) on said measurement side (Y), and an electronic carrier gas flow measurer (FM) for the determination of the difference in pressure of the gas upstream and downstream of said calibrated restriction (R1) on the oxygen feed line, an electronic pressure regulator or flow regulator of the carrier gas in reference side (X) and at least one carrier gas outer valve (V4), which is also used as washing, being inserted on said carrier gas reference side (X); wherein an independent selection of the oxygen volumes or of the injection times is obtained by varying said difference in pressure by the first pressure regulator.

2. A device for metering the oxygen in an elemental analyzer of the gases of the combustion of a sample, comprising:

   - at least one combustion reactor;
   - a sampling device for introducing a sample of material into the combustion reactor;
   - an oxygen feed line for admitting controlled volumes of oxygen into the combustion reactor depending on the sample for the complete combustion thereof,
   - a pneumatic circuit, comprising a reference side (X) and a measurement side (Y) for creating a continuous flow of a carrier gas that is able to carry the oxygen to the reactor and the gases of the combustion through the reactor, then through a gas chromatographic analyzer and, after their separation, into a thermal conductivity detector,
   said oxygen feed line converging into said measurement side (Y) at a junction (A) upstream and at a given distance (d) of said combustion reactor;
   - an electronic apparatus with a data processor for controlling the functioning of the elemental analyzer;
   - an electronic pressure regulator (PC1) associated to said oxygenfeed line, upstream of a calibrated restriction (R1) an electronic carrier gas pressure regulator (PC2) on said measurement side (Y), and an electronic carrier gas flow measurer (FM) for the determination of the difference in pressure of the gas upstream and downstream of said calibrated restriction(R1) on the oxygen feed line, an electronic pressure regulator or flow regulator of the carrier gas in reference side (X) and at least one carrier gas outer valve (V4), which is also used as washing, being inserted on said carrier gas reference side (X); wherein the electronic apparatus is arranged for varying said difference in pressure for an independent selection of the oxygen volumes or of the injection times by the first pressure regulator.

**Patentansprüche**

1. Verfahren zur Verbesserung der flammendynamischen Verbrennungsreaktion verbunden mit Gaschromatographie für die Elementaranalyse von C H N S 0 in einem automatischen Elementaranalysegerät, das Verfahren umfassend:

   - das Bereitstellen mindestens eines Verbrennungsreaktors;
   - das Bereitstellen eines Probenahmegeräts;
   - das Einführen einer Materialprobe in den Verbrennungsreaktor mit dem Probenahmegerät;
   - das Bereitstellen einer Sauerstoff-Zuleitung;
   - das Einlassen geregelter Sauerstoffvolumina mit der Sauerstoff-Zuleitung in den Verbrennungsreaktor, abhängig von der Probe, zu ihrer vollständigen Verbrennung;
   - das Bereitstellen einer pneumatischen Schaltung, umfassend eine Referenzseite (X) und eine Messungsseite (Y), zur Erzeugung eines beständigen Flusses eines Trägergases, welches dazu fähig ist, den Sauerstoff zu dem Reaktor und die Gase der Verbrennung durch den Reaktor, dann durch ein gaschromatographisches Analysegerät und, nach ihrer Trennung, in einen Wärmeleitfähigkeitsdetektor zu befördern, wobei die Sauerstoff-Zuleitung in die Messungsseite (Y) bei einer zulaufseitigen Verbindungsstelle (A) und in einem vorgegebenen Abstand (d) des Verbrennungsreaktors übergeht;
   - das Bereitstellen eines elektronischen Geräts mit einem Datenverarbeiter zum Steuern der Arbeitsweise des Elementaranalysegeräts;
   - das Bereitstellen eines elektronischen Druckreglers (PC1), der mit der Sauerstoff-Zuleitung zulaufseitig einer kalibrierten Drosselung (R1) verbunden ist, eines elektronischen Trägergas-Druckreglers (PC2) auf der Messungsseite (Y) und eines elektronischen Trägergas-Flussmessers (FM) zur Bestimmung des Druckunterschiedes des Gases zulaufseitig und ablaufseitig der kalibrierten Drosselung (R1) auf der Sauerstoff-Zuleitung, eines elektronischen Druckreglers oder Flussreglers des Trägergases auf der Referenzseite (X) und mindestens eines äußeren Trägergas-Ventils (V4), das auch zur Spülung verwendet wird und das auf der Trägergas-Referenzseite (X) eingebracht ist;

   wobei eine unabhängige Auswahl der Sauerstoffvolumina oder der Einspeisungszeiten durch Variieren des Druckunterschieds durch den ersten Druckregler erhalten wird.

2. Vorrichtung zur Dosierung des Sauerstoffs in einem Elementaranalysegerät der Gase der Verbrennung einer Probe, umfassend:

   - mindestens einen Verbrennungsreaktor;
   - ein Probenahmegerät zum Einführen einer Materialprobe in den Verbrennungsreaktor;
   - eine Sauerstoff-Zuleitung zum Einlassen geregelter Sauerstoffvolumina in den Verbrennungsreaktor, abhängig von der Probe, zu ihrer vollständigen Verbrennung;
   - eine pneumatische Schaltung, umfassend eine Referenzseite (X) und eine Messungsseite (Y) zur Erzeugung eines beständigen Flusses eines Trägergases, welches dazu fähig ist, den Sauerstoff zu dem Reaktor und die Gase der Verbrennung durch den Reaktor, dann durch ein gaschromatographisches Analysegerät und, nach ihrer Trennung, in einen Wärmeleitfähigkeitsdetektor zu befördern, wobei die Sauerstoff-Zuleitung in die Messungsseite (Y) bei einer zulaufseitigen Verbindungsstelle (A) und in einem vorgegebenen Abstand (d) des Verbrennungsreaktors übergeht;
   - ein elektronisches Gerät mit einem Datenverarbeiter zum Steuern der Arbeitsweise des Elementaranalysegeräts;
   - einen elektronischen Druckregler (PC1), der mit der Sauerstoff-Zuleitung zulaufseitig einer kalibrierten Drosselung (R1) verbunden ist, einen elektronischen Trägergas-Druckregler (PC2) auf der Messungsseite (Y) und einen elektronischen Trägergas-Flussmesser (FM) zur Bestimmung des Druckunterschiedes des Gases zulaufseitig und ablaufseitig der kalibrierten Drosselung (R1) auf der Sauerstoff-Zuleitung, einen elektronischen Druckregler oder Flussregler des Trägergases auf der Referenzseite (X) und mindestens ein äußeres Trägergas-Ventil (V4), das auch zur Spülung verwendet wird und das auf der Trägergas-Referenzseite (X) eingebracht ist;
   wobei das elektronische Gerät zum Variieren des Druckunterschiedes zu einer unabhängigen Auswahl der Sauerstoffvolumina oder der Einspeisungszeiten durch den ersten Druckregler eingerichtet ist.

**Revendications**

1.  Un procédé pour améliorer la dynamique réactionnelle d'une combustion éclair en liaison avec l'analyse élémentaire de C H N S 0 par chromatographie gazeuse dans un analyseur élémentaire automatique, le procédé comprenant:

    - fournir au moins un réacteur de combustion;
    - fournir au moins un dispositif d'échantillonnage;
    - introduire un échantillon dans le réacteur de combustion via le dispositif d'échantillonnage;
    - fournir une ligne d'alimentation en oxygène;
    - introduire volumes contrôlés d'oxygène via la ligne d'alimentation en oxygène dans le réacteur de combustion, en fonction de l'échantillon pour en effectuer sa combustion complète;
    - fournir un circuit pneumatique, qui comprend une ligne de référence (X) et une ligne de mesure (Y) pour créer un flux continu d'un gaz vecteur capable de transporter l'oxygène jusqu'au réacteur et les gaz de combustion à travers le réacteur, puis à travers un analyseur de chromatographie gazeuse et, après leur séparation, à travers un détecteur à conductivité thermique, ladite ligne d'alimentation en oxygène convergeant dans ladite ligne de mesure (Y) à la jonction (A) en amont et à une certain distance (d) dudit réacteur de combustion;
    - fournir un système électronique avec un processeur des données pour contrôler les fonctions de l'analyseur élémentaire;
    - fournir un régulateur de pression électronique (PC1) associé à ladite ligne d'alimentation en oxygène en amont d'une restriction calibrée (R1), un régulateur de pression électronique (PC2) du gaz vecteur dans ladite ligne de mesure (Y), et un débitmètre électronique (FM) du gaz vecteur pour la détermination de la différence de pression du gaz en amont et en aval de ladite restriction calibrée (R1) dans la ligne d'alimentation en oxygène, un régulateur de pression électronique ou un régulateur de débit électronique du gaz vecteur dans la ligne de référence (X) et au moins une vanne externe (V4) du gaz vecteur, qui est aussi utilisé pour purger, comprise dans ladite ligne de référence (X) du gaz vecteur;
    dans lequel une sélection indépendante des volumes d'oxygène ou des temps d'injection est effectuée en faisant varier ladite différence de pression avec le premier régulateur de pression.

2.  Un dispositif pour mesurer l'oxygène dans un analyseur élémentaire des gaz de combustion d'un échantillon, comprenant:

    - au moins un réacteur de combustion;
    - un dispositif d'échantillonnage pour introduire un échantillon dans le réacteur de combustion;
    - une ligne d'alimentation en oxygène pour introduire des volumes contrôlés d'oxygène dans le réacteur de combustion en fonction de l'échantillon pour en obtenir sa combustion complète;
    - un circuit pneumatique, comprenant une ligne de référence (X) et une ligne de mesure (Y) pour créer un flux continu d'un gaz vecteur capable de transporter l'oxygène jusqu'au réacteur et les gaz de combustion à travers le réacteur, puis à travers un analyseur de chromatographie gazeuse et, après leur séparation, dans un détecteur à conduction thermique;
    ladite ligne d'alimentation en oxygène convergeant dans la ligne de mesure (Y) à la jonction (A) en amont et à une certain distance (d) dudit réacteur de combustion;
    - un dispositif électronique avec un processeur des données pour contrôler les fonctions de l'analyseur élémentaire;
    - un régulateur de pression électronique (PC1) associé à ladite ligne d'alimentation en oxygène en amont d'une restriction calibrée (R1), un régulateur de pression électronique (PC2) du gaz vecteur dans ladite ligne de mesure (Y), et un débitmètre électronique (FM) du gaz vecteur, pour la détermination de la différence de pression du gaz en amont et en aval de ladite restriction calibrée (R1) dans la ligne d'alimentation en oxygène, un régulateur de pression électronique ou un régulateur de débit du gaz vecteur dans la ligne de référence (X) et au moins une vanne externe (V4) du gaz vecteur, qui est aussi utilisé pour purger, étant comprise dans ladite ligne de référence (X) du gaz vecteur;
    dans lequel le dispositif électronique est capable de varier ladite différence de pression pour une sélection indépendante des volumes d'oxygène ou des temps d'injection avec le premier régulateur de pression.

*Fig.1*

Fig.2

Fig.3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4293308 A